(19) Europäisches Patentamt
European Patent Office
Office européen des brevets

(11) Veröffentlichungsnummer: **0 152 878**
**B1**

(12) # EUROPÄISCHE PATENTSCHRIFT

(45) Veröffentlichungstag der Patentschrift: **04.01.89**

(51) Int. Cl.[4]: **C 08 G 18/20**, C 08 G 18/16, C 08 L 75/06, C 08 G 77/18

(21) Anmeldenummer: **85101331.8**

(22) Anmeldetag: **08.02.85**

(54) **Verfahren zur Herstellung von flexiblen Polyesterurethanschäumen.**

(30) Priorität: **21.02.84 DE 3406188**

(43) Veröffentlichungstag der Anmeldung: **28.08.85 Patentblatt 85/35**

(45) Bekanntmachung des Hinweises auf die Patenterteilung: **04.01.89 Patentblatt 89/1**

(84) Benannte Vertragsstaaten: **BE FR GB IT NL**

(56) Entgegenhaltungen:
**EP-A-0 082 597**
**DE-A-1 719 238**
**DE-B-1 174 495**
**DE-B-1 282 949**
**US-A-3 398 104**
**US-A-3 594 334**
**US-A-3 661 808**

**CHEMICAL ABSTRACTS, Band 95, Nr. 16, 19. Oktober 1981, Seite 35, Spalte 2, Zusammenfassungsnr. 133826g, Columbus, Ohio, US; & SU - A - 836 016 (T.A. ZAKHAROVA et al.) 07.06.1981**

(73) Patentinhaber: **Th. Goldschmidt AG, Goldschmidtstrasse 100 Postfach 101461, D-4300 Essen 1 (DE)**

(72) Erfinder: **Kollmeier, Hans-Joachim, Dr., Barkhorstrücken 27, D-4300 Essen (DE)**
Erfinder: **Schlöns, Hans- Heinrich, Haverkamp 29 a, D-4300 Essen (DE)**

**EP 0 152 878 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft ein Verfahren zur Herstellung von flexiblen Polyesterurethanschäumen durch Umsetzung von Polyesterpolyolen mit mindestens zwei Hydroxylgruppen im Molekül und mindestens difunktionellen Polyisocyanaten in Gegenwart von Wasser, gegebenenfalls physikalischen Treibmitteln, Katalysatoren, Stabilisatoren und gegebenenfalls üblichen anderen Zusatzmitteln.

Bei der Herstellung von flexiblen Polyesterpolyurethanschäumen verwendet man im allgemeinen als Katalysatoren N-Alkylmorpholine oder Dimethylbenzylamin. Diese Katalysatoren weisen während des Aufschäumvorganges eine hohe Selektivität für die Reaktion des Polyisocyanats mit Wasser auf. Diese selektive Katalyse ist für den Erhalt möglichst offenzelliger, nichtschrumpfender Schäume erforderlich. Die genannten Katalysatoren haben jedoch den Nachteil, daß ihre katalytische Wirksamkeit insgesamt schwach ist. Sie müssen daher dem Verschäumungsansatz in relativ hohen Mengen zugegeben werden. Dies führt dazu, daß die Schäume nach dem Aushärten intensiv und unangenehm riechen.

Es hat deshalb nicht an Versuchen gefehlt, andere Katalysatoren mit geringerem Geruch aufzufinden. So sind beispielsweise in der US-PS-3 954 749 β-Aminocarbonyl-Verbindungen, wie z. B. 3-(N-morpholino)-N',N'-dialkylamide, als Katalysator beschrieben.

In der US-PS-3 925 268 werden β-tert.-Aminonitrile empfohlen. Beispiel einer solchen Verbindung ist das 3-(N'N-dimethylamino)-propionitril.

Weitere Verbindungen können den US-Patentschriften 3 821 131, 4 011 223, 4 012 445, 4 038 210, 4 049 931, 4 115 321 und 4 122 038 entnommen werden.

In der EP-A-0 048 985 sind Katalysatormischungen beschrieben, welche aus wenigstens einem Hydroxyalkylpiperazin und einem anderen tertiären Amin bestehen.

Diese in der Patentliteratur beschriebenen Katalysatoren haben zwar den Vorteil eines verminderten Geruchs, haben aber eine verringerte Selektivität für die Isocyanat-Wasser-Reaktion gegenüber der Polyol-Isocyanat-Reaktion und führen daher zu geschlossenzelligeren Schaumstoffen. Die β-Propionitrile sind außerdem physiologisch nicht unbedenkliche Verbindungen.

Es ist außerdem vorgeschlagen worden, für die Herstellung von flexiblen Polyesterurethanschäumen Mischungen von Katalysatoren zu verwenden. Insbesondere werden dabei Gemische von Morpholinderivaten als selektive Katalysatoren für die Isocyanat-Wasser-Reaktion und anderen, katalytisch wirksameren Aminen genannt. Aus der EP-A-0 082 597 ist z. B. bekannt, Alkylmorpholinen geringe Mengen N,N'-Dimethylpiperazin zuzusetzen. Die zugesetzte Menge beträgt dabei 0,05 bis 0,15 Gew.-Teile, bezogen auf 1 Gew.-Teil des Alkylmorpholins. Erhöht man die Menge an N,N'-Dimethylpiperazin, erhält man Polyesterschaumstoffe mit verminderter Offenzelligkeit, die zusätzlich zum Schrumpf neigen. Ein ähnliches Verfahren wird in der US-Patentschrift US-A-4 326 042 beschrieben. Darin wird ein Gemisch von 5 bis 15 Gew.-Teilen N,N'-Dimethylpiperazin mit 20 bis 60 Gew.-Teilen N-Butylmorpholin und zusätzlich 20 bis 60 Gew.-Teilen N-Methoxypropylmorpholin als Katalysator für Polyesterurethanschäume genannt. In der deutschen Patentschrift DE-B-2 138 402 wird für die Herstellung von flexiblen Polyesterurethanschäumen ein Gemisch aus 50 bis 90 Gew.-% 4,4'-Dimorpholinodiethylether und 50 bis 10 Gew.-% N,N'-Dimethylpiperazin als Katalysator empfohlen. Allen diesen Verfahren ist gemeinsam, daß N,N'-Dimethylpiperazin nur zu maximal 50 Gew.-% in den verwendeten Katalysatorgemisch enthalten sein kann. Die insgesamt einzusetzende Menge an Aminkatalysator bleibt dadurch unangemessen hoch.

Eine Erhöhung des Anteils von N,N'-Dimethylpiperazin in den Katalysatorgemischen ist nicht möglich, da dann Polyesterschäume mit verminderter Offenzelligkeit entstehen. Die Verwendung von N,N'-Dimethylpiperazin als alleinigem Katalysator ist nach der Lehre der DE-AS-1 168 633 nicht möglich, da dies zur Bildung von Polyesterschaumstoffen mit ungleichmäßiger, grober Zellstruktur führt.

Es ist weiterhin aus der DE-AS-1 282 949 ein Verfahren zur Herstellung von biegsamen Polyesterurethanschaumstoffen durch Reaktion von Polyestern mit durchschnittlich mindestens zwei Hydroxylgruppen je Molekül und einer Hydroxylzahl von etwa 45 bis 150 und Polyisocyanaten in Gegenwart eines Treibmittels und von Polysiloxan-Polyoxyalkylen-Blockmischpolymerisaten als oberflächenaktivem Mittel und Katalysatoren für die Urethanbildungsreaktion bekannt, welches dadurch gekennzeichnet ist, daß man als Blockmischpolymere solche mit einem Molekulargewicht von 3000 bis 17 000 und einem Polysiloxangehalt von etwa 14 bis 42 Gewichtsprozent und einem Oxyethylengehalt von mindestens 75 Gewichtsprozent, bezogen auf die Gesamtmenge an Oxyalkylengruppen, im Polyoxyalkylenblock verwendet, wobei der Polysiloxanblock Siloxangruppen der allgemeinen Formel

$$R_bSiO_{\frac{4-b}{2}}$$

aufweist, worin R ein einwertiger Kohlenwasserstoffrest oder ein zweiwertiger organischer Rest ist und mindestens ein Substituent R ein zweiwertiger organischer Rest ist, der an einem Polyoxyalkylenblock gebunden ist und b = 1 bis einschließlich 3 ist, und daß man als Katalysator einen solchen höherer Aktivität als N-Ethylmorpholin verwendet, oder daß man Blockmischpolymere mit einem Molekulargewicht von etwa 3000 bis 7000 und einem Polysiloxangehalt von 14 bis 20 Gewichtsprozent sowie einem Oxyethylengehalt von mindestens 75 Gewichtsprozent auf die Gesamtmenge der Oxyalkylengruppe des Polyoxyalkylenblocks verwendet, wobei der Polysiloxanblock Siloxangruppen des Polysiloxanblocks der oben angegebenen allgemeinen Formel

$$R_bSiO_{\frac{4-b}{2}}$$

aufweist, die wie oben an den Polyoxyalkylenblock gebunden sind, und daß ein üblicher Polyurethanbildungskatalysator verwendet wird.

Hierdurch wird dem Fachmann aber in bezug auf den Katalysator keine echte Auswahlregel gelehrt, da N-Ethylmorpholin ein sehr schwacher Katalysator ist und die Mehrzahl der verwendeten Katalysatoren wirksamer als N-Ethylmorpholin ist. Als hochaktive Katalysatoren werden Triethylamin, N,N,N',N'-Tetramethyl-1,3-butandiamin, Triethylendiamin, N,N-Dimethylethanolamin, Dibutylzinndilaurat, Dibutylzinndi-2-ethylhexoat, Zinn(II)-octoat oder Zinn(II)-oleat genannt. Es hat sich jedoch gezeigt, daß bei Verwendung dieser hochaktiven Katalysatoren und der genannten Copolymeren Schäume mit unzureichender Qualität entstehen können. Zum Beispiel führt der Katalysator Dimethylethanolamin zu Kernverfärbungen, Zinnoctoat und Triethylendiamin zu geschlossenen Schaumstoffen.

Der Erfindung liegt die Aufgabe zugrunde, flexible Polyesterurethanschäume mit hoher Offenzelligkeit herzustellen, wobei die Schäume keinen oder nur sehr geringen Schrumpf aufweisen sollen und wobei der verwendete Katalysator oder das verwendete Katalysatorengemisch möglichst keinen störenden Geruch verursachen soll. Der dabei verwendete Katalysator soll trotz der geforderten hohen Offenzelligkeit und des geringen Schrumpfes gute katalytische Wirksamkeit aufweisen.

Überraschenderweise wurde nun gefunden, daß diese Aufgabe erfindungsgemäß dadurch gelöst werden kann, daß man dem Reaktionsansatz zur Katalyse, jeweils bezogen auf Polyesterpolyol,

a) 0,2 bis 1,5 Gew.-% N,N'-Dimethylpiperazin und
b) 0,05 bis 0,5 Gew.-% eines Polysiloxan-Polyoxyalkylen-Blockmischpolymerisats der allgemeinen Formel

$$(CH_3)_3SiO\left[Si(CH_3)_2O\right]_a\left[\begin{matrix}SiCH_3O\\ |\\ R^1\end{matrix}\right]_b Si(CH_3)_3$$

worin $R^1$ ein Polyoxyalkylenrest der allgemeinen Formel

$$-(CH_2)_3O(C_mH_{2m}O)_nR^2$$

ist, in welcher
$R^2$ ein Alkylrest mit 1 bis 4 Kohlenstoffatomen,
m =2 oder 3, wobei im Mittel der Wert von m 2,0 bis 2,5 ist,
n = eine ganze Zahl, entsprechend einem Molekulargewicht des Restes $R^1$ von 250 bis 1600, und
a eine ganze Zahl von 3 bis 12,
b eine ganze Zahl von 3 bis 12 ist,
in Form eines Gemisches beider Bestandteile zusetzt.

Eine bevorzugte Ausführungsform des erfindungsgemäßen Verfahrens ist dadurch gekennzeichnet, daß man dem Reaktionsansatz ein Gemisch von 0,3 bis 1,0 Gew.-% N,N'-Dimethylpiperazin und 0,05 bis 0,3 Gew.-% Polysiloxan-Polyoxyalkylen-Blockmischpolymerisat der vorgenannten Formel zusetzt.

Es ist von wesentlicher Bedeutung, daß das beim erfindungsgemäßen Verfahren zur Katalyse verwendete Gemisch N,N'-Dimethylpiperazin als überwiegenden oder alleinigen Katalysator in einer Menge enthält, welche wesentlich über der dem Stand der Technik entsprechenden Menge liegt. Durch den Zusatz des Polysiloxan-Polyoxyalkylen-Blockmischpolymerisats wird bewirkt daß trotz dieser höheren Menge N,N'-Dimethylpiperazin und der damit bewirkten Katalyse ein Schaum der gewünschten Offenzelligkeit erhalten wird. Die insgesamt einzusetzende Menge an Aminkatalysator ist dadurch bei dem erfindungsgemäßen Verfahren jedoch deutlich geringer.

Das im erfindungsgemäß zu verwendenden Gemisch enthaltene Polysiloxan-Polyoxyalkylen-Blockmischpolymerisat entspricht der allgemeinen Formel

$$(CH_3)_3SiO\left[Si(CH_3)_2O\right]_a\left[\begin{matrix}SiCH_3O\\ |\\ R^1\end{matrix}\right]_b Si(CH_3)_3$$

In dieser Formel ist a eine ganze Zahl von 3 bis 12, b eine ganze Zahl von 3 bis 12. $R^1$ ist ein Polyoxyalkylenrest der allgemeinen Formel

$$-(CH_2)_3O(C_mH_{2m}O)_nR^2$$

Der Rest $R^2$ ist ein Alkylrest mit 1 bis 4 Kohlenstoffatomen, wie der Methyl-, Ethyl-, Propyl- oder Butylrest. m

ist 2 oder 3, so daß der Polyoxyalkylenrest Oxyethyleneinheiten und Oxypropyleneinheiten enthalten kann. Der Gehalt an Oxyethylen- und Oxypropyleneinheiten ist dabei so bemessen, daß im mittleren Molekül m einen Wert von 2,0 bis 2,5 hat. Ist der Wert 2,0, enthält der Polyoxyalkylenrest nur Oxyethyleneinheiten. Ist der Wert m = 2,5, sind die Mol-Anteile an Oxyethylen- und Oxypropyleneinheiten gleich.

Der Wert von n ist so groß, daß das Molekulargewicht des Polyoxyalkylenrestes $R^1$ einen Wert von 250 bis 1600 aufweist.

Zur besseren Verteilung des Gemisches aus N,N'-Dimethylpiperazin und Polysiloxan-Polyoxyalkylen-Blockmischpolymerisat hat es sich als vorteilhaft erwiesen, daß man dem Reaktionsansatz zusätzlich 50 bis 200 Gew.-%, bezogen auf das Gemisch aus N,N'-Dimethylpiperazin und Blockmischpolymerisat, eines nichtionischen, wasserlöslichen Emulgators zusetzt. Als wasserlösliche nichtionische Emulgatoren sind die Anlagerungsprodukte des Ethylenoxids an Alkylphenole, wie z. B. Octylphenol oder Nonylphenol, oder Fettalkohole besonders geeignet. Die Menge des angelagerten Ethylenoxids muß dabei so hoch gewählt werden, daß die Anlagerungsprodukte wasserlöslich werden. Besonders bevorzugt sind deshalb Alkylphenole oder Fettalkohole mit 8 bis 15 Mol Ethylenoxid.

Beispiele besonders geeigneter Polysiloxan-Polyoxyalkylen-Blockmischpolymerisate sind

$$\text{I}\quad (CH_3)_3SiO\left[Si(CH_3)_2O\right]_8\left[\begin{array}{l}SiCH_3O\\ |\\ (CH_2)_3\end{array}\right]_{10}Si(CH_3)_3$$
$$\qquad\qquad\qquad\qquad |$$
$$\qquad\qquad\qquad O-(C_2H_4O-)_{10,5}(C_3H_6O-)_{1,2}CH_3$$

$$\text{II}\quad (CH_3)_3SiO\left[Si(CH_3)_2O\right]_6\left[\begin{array}{l}SiCH_3O\\ |\\ (CH_2)_3\end{array}\right]_8Si(CH_3)_3$$
$$\qquad\qquad\qquad\qquad |$$
$$\qquad\qquad\qquad O-(C_2H_4O-)_9CH_3$$

$$\text{III}\quad (CH_3)_3SiO\left[Si(CH_3)_2O\right]_4\left[\begin{array}{l}SiCH_3O\\ |\\ (CH_2)_3\end{array}\right]_4Si(CH_3)_3$$
$$\qquad\qquad\qquad\qquad |$$
$$\qquad\qquad\qquad O-(C_2H_4O-)_{14}(C_3H_6O-)_4CH_3$$

Beispiele für erfindungsgemäß zuzusetzende Gemische sind (Zusammensetzung in Gew.-%)

| Gemisch | Blockmischpolymerisat | | | N,N'-Dimethyl-piperazin | Nonylphenol + 9 EO |
|---|---|---|---|---|---|
| | I | II | III | | |
| A | 6 | | | 40 | 54 |
| B | | 10 | | 40 | 50 |
| C | | | 10 | 40 | 50 |

Trotz des verhältnismäßig hohen Gehalts an N,N'-Dimethylpiperazin weisen die erfindungsgemäß erhaltenen Polyesterurethanschäume eine hohe Offenzelligkeit auf und zeigen keinen oder sehr geringen Schrumpf. Die Geruchsbelästigung durch den verwendeten Katalysator ist gering.

Es ist natürlich möglich, zusätzlich geringe Mengen üblicher, wenig aktiver Katalysatoren zu verwenden. Jedoch erlaubt das erfindungsgemäße Verfahren den Zusatz in solchen geringen Konzentrationen, daß Störungen durch Geruch kaum auftreten.

In den folgenden Beispielen wird die Herstellung von flexiblen Polyesterurethanschäumen unter Verwendung von Katalysatoren des Standes der Technik und im Vergleich hierzu unter Verwendung des erfindungsgemäß zu verwendenden Gemisches gezeigt. Es werden die Eigenschaften der so erhaltenen Schäume gegenübergestellt.

**Beispiel 1**

Die erfindungsgemäß zuzusetzenden Gemische werden in folgender Formulierung für flexible Polyesterpolyurethanschäume untersucht.

| | Gew.-Teile |
|---|---|
| Polyesterpolyol (Desmophen® 2200) | 100 |
| Wasser | 5,5 |
| Stabilisator Tegostab®B 5055 | 1,0 |
| Aminkatalysator | unterschiedlich |
| Gemisch TDI 80/TDI 65 = 7/3 | 65,5 |

Das eingesetzte Polyesterpolyol ist ein handelsübliches Produkt (Polyethylenadipat) mit einer OH-Zahl von 60.

Der Stabilisator Tegostab®B 5055 ist ein handelsübliches Polysiloxan-Polyoxyalkylen-Blochmischpolymerisat zur Stabilisierung von Polyesterschäumen.

TDI 80 und TDI 65 sind Isomerengemische des Toluoldiisocyanats. TDI 80 = 2.4/2.6-Isomer im Verhältnis 80/20 und TDI 65 = 2.4/2.6-Isomer im Verhältnis 65/35.

Die Verschäumungen werden auf einer Hennecke UBT Hochdruckmaschine bei einem Polyesterpolyolausstoß von 4 kg/Min. durchgeführt. Es werden Schaumkörper der Abmessung 27 x 27 x 35 cm hergestellt und das Reaktionsverhalten sowie die physikalischen Eigenschaften nach Aushärtung untersucht. Zum Vergleich werden Schäume mit N-Methylmorpholin und mit N,N'-Dimethylpiperazin ohne erfindungsgemäßen Zusatz der Polysiloxan-Polyoxyalkylen-Blockmischpolymerisate hergestellt. Dabei werden die in Tabelle 1 aufgeführten Ergebnisse erhalten.

**Tabelle 1**

| Katalysator | Gemisch A | Gemisch B | Gemisch C | N-Methylmorpholin | N,N'-Dimethylpiperazin | N,N'-Dimethylpiperazin/ethox. Nonylphenol = 1/1 |
|---|---|---|---|---|---|---|
| Gew.-Teile pro 100 Gew.-Teile Polyol | 1,5 | 1,5 | 1,5 | 1,5 | 0,60 | 1,2 |
| Cremezeit, Sek. | 9 | 9 | 9 | 8 | 9 | 9 |
| Steigzeit, Sek. | 67 | 66 | 67 | 66 | 67 | 68 |
| Raumgewicht, kg/m³ | 20,0 | 20,2 | 20,0 | 20,4 | 19,4 | 19,5 |
| Zellen/cm | 20 | 21 | 20 | 20 | 20 | 19 |
| Luftdurchlässigkeit in mbar | 16 | 8 | 6 | 9 | 29 | 28 |
| Geruch | gering | gering | gering | stark | gering | gering |

Die Luftdurchlässigkeit wird gemessen als Staudruck in Millibar (mbar), welcher sich aufbaut, wenn durch ein Schaumstück von 5 cm Dicke ein konstanter Luftstrom von 8 l/Min. mittels einer Düse von 5 mm Durchmesser geleitet wird. Je niedriger der Zahlenwert, desto offenzelliger ist der Schaum.

Die Ergebnisse zeigen, daß mit den erfindungsgemäß zuzusetzenden Gemischen Polyesterschaumstoffe erhalten werden, die in ihrem Reaktionsverhalten und ihrer Offenzelligkeit ähnliche Eigenschaften ergeben wie mit N-Methylmorpholin hergestellte Schäume, jedoch den zusätzlichen Vorteil aufweisen, daß der nach dem Aushärten wahrnehmbare Amingeruch deutlich vermindert ist.

**Beispiel 2**

Zum Vergleich mit der Lehre der DE-AS-1 282 949 werden in folgender Formulierung

| | Gew.-Teile |
|---|---|
| Polyesterpolyol (Desmophen® 2200) | 100 |
| Wasser | 4,5 |
| Stabilisator Tegostab®B 5055 | 1,0 |
| Aminkatalysator | unterschiedlich |
| Toluoldiisocyanat TDI 80 | 55,5 |

die Katalysatoren Triethylendiamin, N,N,N',N'-Tetramethylbutandiamin, N,N-Dimethylethanolamin, Zinn(II)octoat gegenüber N,N'-Dimethylpiperazin jeweils in Abmischung mit 0,1 Gew.-Teilen

Blockmischpolymerisat I, bezogen auf 100 Gew.-Teile Polyol, eingesetzt. Die Menge der einzelnen Katalysatoren wird dabei so gewählt, daß sich ungefähr gleiche Steigzeiten ergeben.

Es werden folgende Ergebnisse erhalten:

| Katalysator | Triethylendiamin | Tetramethylbutandiamin | Dimethylethanolamin | Zinn(II)-octoat | Dimethylpiperazin |
|---|---|---|---|---|---|
| Gew.-Teile | 0,18 | 0,3 | 0,5 | 0,21 | 0,45 |
| Steigzeit, Sek. | 122 | 120 | 118 | 120 | 121 |
| Luftdurchlässigkeit, mbar | 38 (Schrumpf) | 28 | 17 | 25 | 10 |
| Kernverfärbung | - | - | stark | - | - |

Die Ergebnisse zeigen, daß Dimethylpiperazin gegenüber den anderen aktiveren Katalysatoren deutliche Vorteile hinsichtlich der Offenzelligkeit und der Tendenz der Kernverfärbung erbringt.

## Patentansprüche

1. Verfahren zur Herstellung von flexiblen Polyesterurethanschäumen durch Umsetzung von Polyesterpolyolen mit mindestens zwei Hydroxylgruppen im Molekül und mindestens difunktionellen Polyisocyanaten in Gegenwart von Wasser, gegebenenfalls physikalischen Treibmitteln, Katalysatoren, Stabilisatoren und gegebenenfalls üblichen anderen Zusatzmitteln, dadurch gekennzeichnet, daß man dem Reaktionsansatz zur Katalyse, jeweils bezogen auf Polyesterpolyol,

a) 0,2 bis 1,5 Gew.-% N,N'-Dimethylpiperazin und
b) 0,05 bis 0,5 Gew.-% eines Polysiloxan-Polyoxyalkylen-Blockmischpolymerisats der allgemeinen Formel

$$(CH_3)_3SiO\left[Si(CH_3)_2O\right]_a\left[\begin{matrix}SiCH_3O\\ |\\ R^1\end{matrix}\right]_b Si(CH_3)_3$$

worin $R^1$ ein Polyoxyalkylenrest der allgemeinen Formel

$$(CH_2)_3O(C_mH_{2m}O)_nR^2$$

ist, in welcher
$R^2$ ein Alkylrest mit 1 bis 4 Kohlenstoffatomen,
m = 2 oder 3, wobei im Mittel der Wert von m = 2,0 bis 2,5 ist,
n = eine ganze Zahl, entsprechend einem Molekulargewicht des Restes $R^1$ von 250 bis 1600, und
a eine ganze Zahl von 3 bis 12,
b eine ganze Zahl von 3 bis 12 ist,
in Form eines Gemisches beider Bestandteile zusetzt.

2. Verfahren nach Anspruch 1, dadurch gekennzeichnet, daß man dem Reaktionsansatz ein Gemisch von 0,3 bis 1,0 Gew.-% N,N'-Dimethylpiperazin und 0,05 bis 0,3 Gew.-% Polysiloxan-Polyoxyalkylen-Blockmischpolymerisat der vorgenannten Formel zusetzt.

3. Verfahren nach Anspruch 1 oder 2, dadurch gekennzeichnet, daß man dem Reaktionsansatz zusätzlich 50 bis 200 Gew.-%, bezogen auf das Gemisch aus N,N'-Dimethylpiperazin und Blockmischpolymerisat, eines nichtionischen, wasserlöslichen Emulgators zusetzt.

## Claims

1. Process for the production of flexible polyester urethane foams by reacting polyester polyols containing at least two hydroxyl groups in the molecule with at least difunctional polyisocyanates in the presence of water, optionally physical blowing agents, catalysts, stabilizers and optionally other customary additives, characterized in that, in each case relative to the polyester polyol,

a) 0.2 to 1.5 % by weight of N,N'-dimethylpiperazine and
b) 0.05 to 0.5 % by weight of a polysiloxane-polyoxyalkylene block copolymer of the general formula

$$(CH_3)_3SiO\left[Si(CH_3)_2O\right]_a\left[\begin{matrix}SiCH_3O\\ |\\ R^1\end{matrix}\right]_b Si(CH_3)_3$$

in which $R^1$ is a polyoxyalkylene radical of the general formula

$$(CH_2)_3O(C_mH_{2m}O)_nR^2$$

in which
$R^2$ is an alkyl radical having 1 to 4 carbon atoms,
m = 2 or 3, where the average value of m = 2.0 to 2.5, and
n = an integer, corresponding to a molecular weight for the $R^1$ radical of 250 to 1600, and
a is an integer from 3 to 12,
b is an integer from 3 to 12,
in the form of a mixture of the two components are added to the reaction batch for catalysis.

2. Process according to Claim 1, characterized in that a mixture of 0.3 to 1.0 % by weight of N,N'-dimethylpiperazine and 0.05 to 0.3 % by weight of polysiloxane-polyoxyalkylene block copolymer of the abovementioned formula is added to the reaction batch.

3. Process acccording to Claim 1 or 2, characterized in that, in addition, 50 to 200 % by weight, relative to the mixture of N,N'-dimethylpiperazine and the block copolymer, of a nonionic, water-soluble emulsifier are added to the reaction batch.

**Revendications**

1. Procédé pour la préparation de mousses de polyesteruréthanne flexibles, par la réaction de polyesters-polyols comportant au moins deux groupes hydroxyle dans leur molécule et de polyisocyanates au moins difonctionnels, en présence d'eau, éventuellement d'agents d'expansion physiques, de catalyseurs, de stablisants et éventuellement d'autres additifs habituels, caractérisé en ce qu'on ajoute à la masse réactionnelle, pour catalyse, les pourcentages étant rapportés au polyester-polyol,

a) de 0,2 à 1,5 % en poids de N,N'-diméthylpipérazine, et
b) de 0,05 à 0,5 % en poids d'un copolymère séquencé polysiloxane-polyoxyalkylène de formule générale

$$(CH_3)_3SiO\left[Si(CH_3)_2O\right]_a\left[\begin{matrix}SiCH_3O\\ |\\ R^1\end{matrix}\right]_b Si(CH_3)_3$$

dans laquelle $R^1$ est un radical polyoxyalkylène de formule générale

$$(CH_2)_3O(C_mH_{2m}O)_nR^2$$

dans laquelle
$R^2$ est un radical alkyle ayant de 1 à 4 atomes de carbone,
m = 2 ou 3, la valeur moyenne de m étant comprise entre 2,0 et 2,5,
n = est un nombre entier, correspondant à une masse moléculaire du radical $R^1$ de 250 à 1600, et
a est un nombre entier de 3 à 12,
b est un nombre entier de 3 à 12,
sous forme d'un mélange des deux constituants.

2. Procédé selon la revendication 1, caractérisé en ce qu'on ajoute à la masse réactionnelle un mélange de 0,3 à 1,0 % en poids de N,N'-diméthylpipérazine et de 0,05 à 0,3 % en poids d'un copolymère séquencé polysiloxane-polyoxyalkylène ayant la formule ci-dessus.

3. Procédé selon la revendication 1 ou 2, caractérisé en ce qu'on ajoute encore, à la masse réactionnelle, de 50 à 200 % en poids, par rapport au mélange de N,N'-diméthylpipérazine et du copolymère séquencé, un émulsifiant non-ionique soluble dans l'eau.